# EUROPÄISCHE PATENTANMELDUNG

(11) **EP 2 080 699 A2**
(43) Veröffentlichungstag der Anmeldung: **22.07.2009**
(21) Anmeldenummer: 08019574.6
(22) Anmeldetag: 08.11.2008
(51) Int. Cl.: B64C 1/10

(54) **Druckschott für ein Flugzeug**

(30) Priorität: 13.11.2007 DE 102007054101
(71) Anmelder: EADS Deutschland GmbH, 85521 Ottobrunn (DE)
(72) Erfinder: Klug, Markus, 85521 Dachau (DE); Hörnlein, Herbert, 85752 Landsham (DE)

(57) **Zusammenfassung**

Die Erfindung betrifft ein Druckschott für ein Flugzeug, dadurch gekennzeichnet, dass es aus einer oder mehreren antiklastischen Flächen (10, 10i) gebildet ist.

## Beschreibung

Die Erfindung betrifft die Bauweise und die Geometrie für den Druckschott eines Flugzeugrumpfs, das einen räumlichen Bereich in diesem druckdicht abschließt.

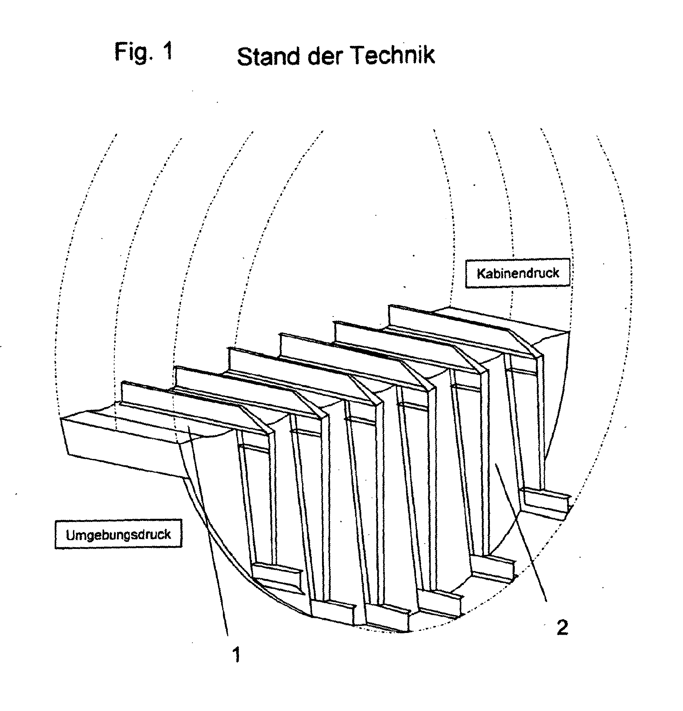

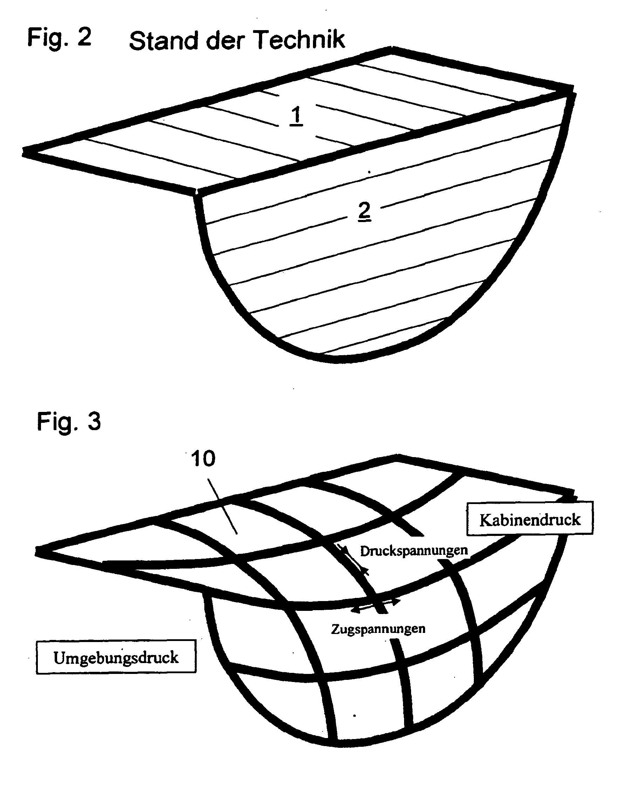

Bei größeren Transportflugzeugen ist der Rumpf für Passagiere und Fracht durch den Kabinendruck belastet. Im Bereich des Fahrwerks steht allerdings nur der Kabinenbereich unter Druck, während der Schacht in dem das Fahrwerk aus- und eingefahren wird dem Umgebungsdruck ausgesetzt ist. Diesen Druckunterschied nehmen ein horizontales 1 sowie ein vertikales 2 Druckschott auf (Fig. 1 und 2), die in der Regel jeweils eben ausgeführt sind. Das horizontale Schott befindet sich direkt unter dem Fußboden der Kabine und ist verbunden mit dem vertikalen Schott, das den Fahrwerksbereich vom Frachtbereich trennt.

In Metallbauweise ist es üblich, die Schotts aus versteiften ebenen Platten auszuführen. In einer alternativen Bauweise besteht das Druckschott, typischerweise das horizontale Druckschott, durch Aneinanderreihen mehrerer einfach gekrümmter Wannen, die aus Blechen geformt sind. Beide Bauweisen sind bekannt und werden bei Transportflugzeugen eingesetzt. Die Größe der verwendeten Halbzeuge, entweder Bleche oder Platten, sowie die Fertigungsverfahren setzen die Grenzen für eine integrale Bauweise. Eine versteifte Platte kann aus einem Stück gefräst werden, wogegen Wannenbleche einzeln geformt und dann mit Nieten oder Bolzen zusammen mit Versteifungselementen zum Schott gefügt werden müssen. Für sehr große Komponenten kann es aus Kosten-, Halbzeug- oder Gründen hinsichtlich der maschinellen Bearbeitung erforderlich sein, eine differentielle Bauweise zu konzipieren, die Fügungen der Komponenten mit Niet- und Bolzenverbindungen vorsieht.

Im Flugzeugbau werden die Aluminiumlegierungen mehr und mehr durch Kohlenstofffaserverbundwerkstoffe ersetzt. Auf diese Weise lassen sich noch leichtere Strukturen entwerfen, die im Vergleich zu Aluminium, wenigstens kostenneutral herzustellen sind. Faserverbundbauweisen ermöglichen hochintegrale, große Strukturkomponenten, die in Metall derart nicht möglich sind. Dadurch spart man die Kosten für die Fügetechnik und kompensiert teilweise den höheren Preis für Halbzeug, Material und Herstellverfahren.

Mit der Einführung von Kohlenstofffaserverbundwerkstoffen, anstelle von Aluminium, müssen im Flugzeugbau neue, werkstoffgerechte Lösungen für Druckschotts erarbeitet werden. Die Herstellung von Versteifungsprofilen in Faserverbundtechnik ist kostenintensiv und kann nicht mit herkömmlichen Metallbauweisen konkurrieren. Flächen mit unterschiedlichen Dicken und lokalen Verstärkungen, so wie auch gekrümmte Flächen, lassen sich einfach und mit Kostenvorteil im Vergleich zu Aluminium fertigen.

Der Erfindung liegt die Aufgabe zugrunde, das horizontale und vertikale Druckschott eines Transportflugzeugs in einer leichten und kostengünstigen Bauweise auszuführen. Das Druckschott muss sowohl Überdruck als auch Unterdruck aus der Kabine des Transportflugzeugs aufnehmen können ohne stabilitätskritisch zu versagen.

Diese Aufgabe wird mit den Gegenständen der Patentansprüche 1. und 4. gelöst. Vorteilhafte Ausführungen sind Gegenstände von Unteransprüchen.

Erfindungsgemäß wird das horizontale sowie das vertikale Schott durch eine antiklastische Fläche, d.h. einer doppelt gekrümmten Fläche mit gegensinniger Krümmung ersetzt. Eine Fläche heißt antiklastisch, wenn die Mittelpunkte ihrer beiden Krümmungsradien auf den gegenüberliegenden Seiten der Fläche liegen. Eine antiklastische Fläche wird auch als Sattelfläche bezeichnet.

Das erfindungsgemäß ausgebildete Druckschott eignet sich gut für die Herstellung in Faserverbundbauweise. Durch den Einsatz der erfindungsgemäßen gegensinnig doppelt gekrümmten Flächen, kann bei solchen Druckschotts auf Versteifungsprofile verzichtet werden. Die auftretenden Drucklasten für das Schott werden durch Zug- und Druckspannungen in der Fläche abgetragen und führen zu einer gewichtseffizienten Komponente. Mit dem Wegfall der Versteifungselemente entfallen auch die Kosten für die teuere Profilfertigung und -positionierung auf der Schale in Faserverbundtechnik. Die Ausführung einer doppelt gekrümmten Struktur mit ggf. lokalen Verstärkungen ist in Faserverbundtechnik leicht möglich. Als Fasermaterial eignen sich alle bekannten Materialien (z.B. C-Fasern, Glasfasern, Aramidfasern).

Für die Herstellung der erfindungsgemäßen Druckschotts können insbesondere folgende Faserverbundverfahren eingesetzt werden:

### Prepregverfahren

Für die Fertigung von Komponenten in Kohlenstofffaserverbundwerkstoffen dominiert im Flugzeugbau derzeit die Prepregtechnologie. Für die Herstellung nicht abwickelbarer Flächen nutzt man dabei den Umstand, dass die Schichten einzeln aufgebaut und die jeweiligen Prepregbänder in Bahnen parallel zueinander auf der Fläche abgelegt werden. Wenn die Bänder nicht zu breit sind, schmiegen sie sich der Kontur der Fläche an. Geringe Variationen bei der Spaltbreite zwischen den Bändern gleichen unzureichendes Schmiegeverhalten zusätzlich aus.

### Harzinfusions- und Injektionsverfahren

In jüngerer Zeit finden sogenannte Harzinfusions- und Injektionsverfahren immer mehr an Bedeutung. Für komplizierte mehrfach gekrümmte Flächen nutzt man in besonderem Maße die Drapierfähigkeit des trockenen Gewebes oder Geleges, das sich den Flächen besser anpasst als ein Prepregband. Trockenes Gewebe oder Gelege kann man also einfacher als Prepreg auf solchen Flächen drapieren. Daher ist diese Bauweise für Harzinfusionsverfahren besonders geeignet.

Die erfindungsgemäße Bauweise des Druckschotts ermöglicht eine kostengünstige Herstellung sowie eine Gewichtsreduzierung des Bauteils.

Das erfindungsgemäße sattelförmige Druckschott kann generell zwei (insbesondere ebene oder einfach gekrümmte) Druckschotts ersetzen, die unter einem bestimmten spitzen oder stumpfen Winkel (insbesondere zwischen 80° und 135°) zueinander angeordnet sind.

Konkrete Ausführungen der Erfindung werden unter Bezugnahme auf Beispiele erläutert. Es zeigen:
- Fig. 1: ein Druckschott im Flugzeugrumpf (Stand der Technik);
- Fig. 2: ein horizontales und vertikales Druckschott in schematischer Darstellung (Stand der Technik);
- Fig. 3: ein erfindungsgemäßes Druckschott, ausgeführt als Sattelfläche;
- Fig. 4: eine Darstellung zur Erzeugung einer einseitigen (orthotropen) Vorspannung zur Modifizierung des Druckschotts, hier um der Bauraumbeschränkung gerecht zu werden;
- Fig. 5: ein erfindungsgemäßes Druckschott aus mehreren Sattelflächen.

Die Erfindung ersetzt das horizontale 1 und das vertikale 2 Schott (Fig. 1,2) durch eine Sattelfläche 10, wie sie in Fig. 3 in einer konkreten Ausführung dargestellt ist. Dies ist eine gegensinnig gekrümmte Fläche, die man als antiklastisch bezeichnet.

Der Normaldruck erzeugt in einer Hauptrichtung Druckspannungen, während sich in der zweiten Hauptrichtung Zugspannungen bilden. Diese Eigenschaft führt dazu, dass die Zugspannungen die für diese Fläche stabilitätskritischen Druckspannungen erhöhen und somit ein frühes Beulen der Schale verhindern. Eine synklastische Fläche, also eine Schale mit gleichgerichteten Krümmungen wie z.B. ein Ellipsoid, würde in den Hauptrichtungen immer ausschließlich Druckspannungen oder Zugspannungen aufbauen. Bei dünnen Wandstärken und entsprechenden Druckspannungen beult diese Schale bzw. kollabiert dann schlagartig, weil die Schale durchschlägt. Für die erfindungsgemäße Sattelfläche besteht die Gefahr der Instabilität erst bei vergleichsweise höheren Drücken. Wegen der gegensinnigen Krümmung kann die antiklastische Schale bis zu einem hohen Grad Drücke sogar aus der entgegengesetzten Richtung aufnehmen ohne durchzuschlagen. Damit erfüllt das erfindungsgemäße Druckschott diese Stabilitätskriterien ohne den Einbau von zusätzlichen Versteifungselementen.

Die gewichtsoptimale Kontur einer solchen Sattelfläche entspricht der sogenannten Minimalfläche. Das ist die kleinste Fläche, die sich berechnet, wenn man den Rand dieser Fläche fest definiert und die Krümmungen variabel lässt. Praktisch kann die Minimalfläche mit einer Seifenhaut für einen entsprechend vorgegebenen Rahmen/Rand visualisiert werden.

Eine solche Minimalfläche (Seifenhaut) entsteht durch die isotrope Oberflächenspannung (gleiche Vorspannung in allen Tangentenrichtungen an der Fläche) im Flächenmaterial (Seifenlauge). Setzt man diese Minimalfläche jetzt einer Druckdifferenz Δp aus, so entsteht eine andere Fläche deren Gleichgewicht durch die Young-Laplace-Gleichung beschrieben wird: Δp=2α H.
Dabei beschreibt H=1/2(1/R1+1/R2) die mittlere Krümmung und α kennzeichnet einen Faktor proportional zur Materialsteifigkeit. Da für Faserverbundmaterial der Wert α im Vergleich zu Δp sehr groß ist, wird H=Δp/(2α) sehr klein, so dass die Minimalflächenbedingung H≡0 praktisch erfüllt bleibt. Somit weicht für den im Flugzeugrumpf betrachteten Kabineninnendruck wegen der hohen Materialsteifigkeit die gewichtsoptimale Fläche nur geringfügig von der Minimalfläche ab.

Im Vergleich mit einer beliebig ermittelten bzw. gestrakten Fläche verhält sich die Minimalfläche unter Normaldruck deutlich stabiler und damit tragfähiger. Die gestrakte Fläche beult lokal bei niedrigerem Druckniveau als die Minimalfläche.

In der Architektur simuliert man Minimalflächen mit Hilfe von Seidenstrümpfen. Wenn die Kontur der Minimalfläche aufgrund einer Druckdifferenz modifiziert werden muss, erfolgt dies über einseitige Vorspannung. Für den Seidenstrumpf bedeutet dies, dass er in einer Richtung, typischerweise der Hauptrichtung, stärker gespannt ist, als in der zweiten Richtung.

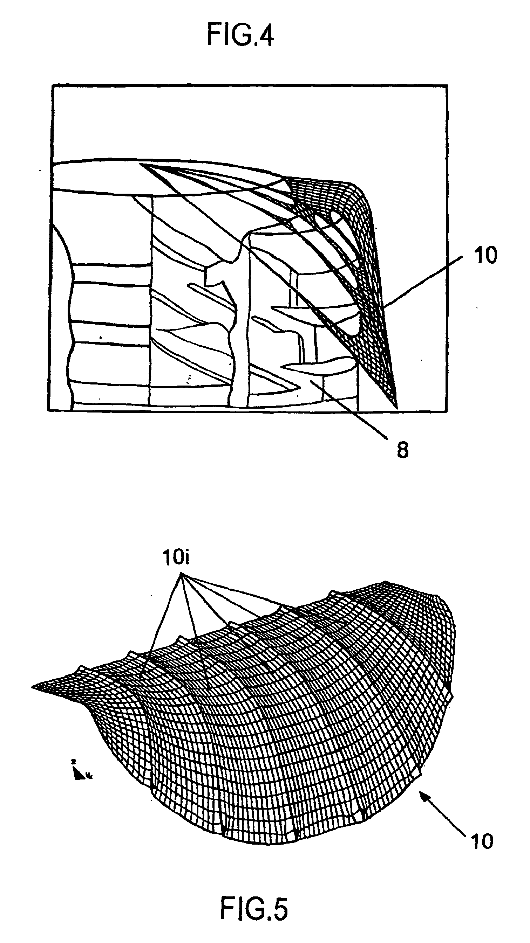

Um der vorherrschenden Druckdifferenz zu genügen, werden durch eine orthotrope Vorspannung die Krümmungen der Minimalfläche modifiziert. Die in Fig. 5 gezeigten Teilflächen 10i werden durch die Erhöhung einer Vorspannung, in Richtung der gekrümmten seitlichen Begrenzungen, so weit vertieft, bis sie der Young-Laplace Bedingung genügen. Diese Teilflächen tragen schließlich den Kabineninnendruck mit reiner Normalspannung (ohne Biegepannung) und sind deshalb gewichtsoptimal.

Diese einseitige Vorspannung kann auch angewandt werden, um Bauraumkonflikte zu beseitigen. In der Fig. 4 ist die die Sattelfläche darstellende elastische Schicht 10 über einen Körper 8 gespannt, der hier z.B. die Form der Umhüllenden des Fahrwerks aufweist. Durch Aufbringung einer zusätzlichen Vorspannung in Querrichtung (senkrecht zur Bildebene) erhält man die modifizierte Form der Sattelfläche, welche an die baulichen Gegebenheiten angepasst ist. Die Erhöhung der Vorspannung erfolgt so lange, bis die geometrischen Randbedingungen erfüllt sind.

Die beschriebene Vorgehensweise eignet sich für eine Herstellung mit Faserverbundwerkstoffen in idealer Weise, da die Hauptfaserrichtung (Materialachse) der verwendeten Fasern oder des Gewebes leicht angepasst werden kann.

Die Tragfähigkeit einer Schale, deren Kontur derart durch Vorspannung berechnet wurde, ist immer noch höher als die einer gestrakten Fläche. Damit führt diese Kontur einer geeignet vorgespannten Fläche zur gewichtsoptimalen Lösung, um einer Bauraumbeschränkung innerhalb der Flugzugstruktur zu genügen.

Hinsichtlich ihrer Steifigkeit und damit ihres Tragverhaltens kann die Sattelfläche verbessert werden, indem man sie in kleinere antiklastische Teilflächen 10i gemäß dem in Fig. 5 dargestellten Beispiel unterteilt.

Zur weiteren Optimierung bestimmt man für diese wiederum die Minimalflächen bzw. die durch Vorspannung modifizierten Flächen. Diese Teilflächen 10i verhalten sich hinsichtlich ihres jeweiligen Tragverhaltens wie oben beschrieben, stützen sich aber gegenseitig. Die Berandung der Teilflächen 10i ist dabei notwendigerweise steifer als die Teilfläche selbst. Eine antiklastische Fläche, die in Längsrichtung in viele kleine Teilflächen unterteilt ist, erinnert an die Kontur einer Jakobsmuschel.

## Patentansprüche

1. Druckschott für ein Flugzeug, **dadurch gekennzeichnet, dass** es die Form einer antiklastischen Fläche (10) aufweist.

2. Druckschott nach Anspruch 1, **dadurch gekennzeichnet, dass** die antiklastische Fläche (10) einer Minimalfläche entspricht.

3. Druckschott nach Anspruch 2, **dadurch gekennzeichnet, dass** die antiklastische Minimalfläche (10) zur Anpassung an vorgegebene Bauraumeinschränkungen und/oder den Innendruck nach der Methode der Anwendung einer orthotropen Vorspannung auf eine elastische Schicht modifiziert ist.

4. Druckschott für ein Flugzeug, **dadurch gekennzeichnet, dass** es aus mehreren antiklastischen Teilflächen (10i) gebildet ist.

5. Druckschott nach Anspruch 4, **dadurch gekennzeichnet, dass** die antiklastischen Teilflächen (10i) jeweils einer Minimalfläche entsprechen.

6. Druckschott nach Anspruch 5, **dadurch gekennzeichnet, dass** eine oder mehrere der antiklastischen Minimalflächen (10i) zur Anpassung an die vorgegebene Bauraumeinschränkungen und/oder den Innendruck nach der Methode der Anwendung einer orthotropen Vorspannung auf eine elastische Schicht modifiziert sind.

7. Druckschott nach einem der vorangehenden Ansprüche, **dadurch gekennzeichnet, dass** es aus einem Faserverbundmaterial besteht.
